# EUROPÄISCHE PATENTSCHRIFT

(11) **EP 4 114 732 B1**
(45) Veröffentlichungstag und Bekanntmachung des Hinweises auf die Patenterteilung: **28.02.2024**
(21) Anmeldenummer: 21714097.9
(22) Anmeldetag: 03.03.2021
(51) Int. Cl.: B64D 11/06

(54) **FLUGGASTSITZ UND SITZREIHE**
AIRCRAFT PASSENGER SEAT, AND SEAT ROW
SIÈGE DE PASSAGER D'AÉRONEF ET RANGÉE DE SIÈGES

(30) Priorität: 05.03.2020 DE 102020106039
(43) Veröffentlichungstag der Anmeldung: 11.01.2023
(73) Patentinhaber: ZIM Aircraft Seating GmbH, 88090 Immenstaad am Bodensee (DE)
(72) Erfinder: ZIMMERMANN, Peter, 88662 Ueberlingen (DE)
(74) Vertreter: Otten, Roth, Dobler & Partner mbB Patentanwälte
(86) Internationale Anmeldenummer: PCT/EP2021/055374
(87) Internationale Veröffentlichungsnummer: WO 2021/175942

(56) Entgegenhaltungen:
- EP-A1- 0 197 167
- EP-A1- 2 767 469
- EP-A1- 2 905 226
- EP-A1- 3 238 989

## Beschreibung

Die Erfindung betrifft einen Fluggastsitz und eine Sitzreihe aufgebaut aus mindestens zwei solcher Fluggastsitze.

### Stand der Technik

Zur Ausstattung von Passagierflugzeugen sind Fluggastsitze und Sitzreihen mit mehreren nebeneinander angeordneten Fluggastsitzen bekannt. Die Fluggastsitze können eine Vielzahl von Ausführungsformen aufweisen.

Fluggastsitze sind beispielsweise aus der EP 2 767 469 A1 und der EP 2 905 226 A1 bekannt. Aus der EP 3 238 989 A1 ist eine Vorrichtung zur Anordnung eines Personenrückhaltesystems in einem Verkehrsmittel bekannt. Aus der EP 0 197 167 ist ein Fahrgastsitz zum Einsatz in einem Luftfahrzeug bekannt.

Alle Fluggastsitze müssen Sicherheitsrichtlinien entsprechen. Gleichzeitig sollen die Sitze ein möglichst geringes Gewicht aufweisen. Außerdem ist eine kompakte Außenform erwünscht. Zur Gewichtsoptimierung werden bevorzugt Leichtbaumaterialien, wie zum Beispiel Aluminium verwendet. Ebenso weisen Bauteile des Fluggastsitzes Ausnehmungen im Material auf, was ebenfalls zu einer Gewichtsreduktion beiträgt.

Der Fluggastsitz muss derart aufgebaut sein, dass er Vorgaben, erfüllt, welche aufgrund durch die Sicherheitsrichtlinien vorgeschriebene Tests, insbesondere Crash-Tests nachzuweisen sind. Hierzu sind mechanisch ausreichend stabile und/oder belastbare Bauteile notwendig, ebenso wie stabile Verbindungen zwischen verschiedenen Bauteilen des Fluggastsitzes.

### Aufgabe und Vorteile der Erfindung

Aufgabe der vorliegenden Erfindung ist es, einen im Hinblick auf Gewicht und Stabilität verbesserten Fluggastsitz bereitzustellen.

Die Aufgabe wird durch die Merkmale des unabhängigen Anspruchs 1 gelöst.

Vorteilhafte und zweckmäßige Ausführungsformen, Weiterbildungen und Varianten der Erfindung sind in den abhängigen Ansprüchen ausgeführt.

Nachfolgend werden alle Richtungen in Bezug zu einer Sitzrichtung angegeben, wobei unter der Sitzrichtung die Richtung zu verstehen ist, in welcher ein Fluggast blickt, wenn er auf dem Fluggastsitz Platz genommen hat.

Die Erfindung geht aus von einem Fluggastsitz mit einem Gestell, das zur Befestigung an einem Boden an einer Fluggastkabine vorgesehen ist, wobei das Gestell einen Sitzteiler und quer zur Sitzrichtung verlaufende Holme umfasst, wobei der Sitzteiler durch die Holme gehalten ist, wobei eine Umhausung ein Strukturbauteil umfasst, wobei die Umhausung eine Rückenlehne zumindest teilweise umgibt.

Vorzugsweise umfasst der Fluggastsitz neben dem Gestell und der Umhausung, eine Kopfstütze, eine Rückenlehne, einen Sitzboden und eine Beinauflage. Diese zum Beispiel vier wesentlichen Teile des Fluggastsitzes sind bevorzugt z.B. über Gelenke oder andere Mechanismen miteinander verbunden, vorteilhafterweise einstellbar, insbesondere gegeneinander verstellbar.

Mit unten wird der Boden der Fluggastkabine bezeichnet, während oben eine entgegengesetzte Position bezeichnet, welche insbesondere vertikal beabstandet zu unten angeordnet ist.

Bevorzugterweise sind das Strukturbauteil, und/oder der Sitzteiler und/oder die Holme aus einem Metallmaterial, z.B. einem Leichtmetall, vorteilhafterweise aus Aluminium, oder aus einem anderen leichten und stabilen Material, und/oder zum Beispiel aus einem Verbundwerkstoff, insbesondere aus einem Kohlefaserverbundwerkstoff hergestellt. Vorteilhafterweise sind alle Bauteile des Fluggastsitzes im Hinblick auf ihre Materialien und das damit verbundene Gewicht optimiert. Insbesondere ist auch eine Form und/oder eine Kontur der Bauteile hinsichtlich des Gewichts optimiert, so dass die Bauteile zum Beispiel Materialausnehmungen aufweisen, welche zu einer Gewichtsersparnis ebenfalls beitragen.

Der Fluggastsitz ist über das Gestell am Boden einer Fluggastkabine anordenbar. Das Gestell ist beispielsweise als eine tragende Struktur des Fluggastsitzes ausgebildet, insbesondere ist das Gestell mechanisch stabil. Das Gestell umfasst den Sitzteiler und die quer zur Sitzrichtung verlaufende Holme, wobei ein erster vorderer Holm und ein zweiter, in Sitzrichtung gesehen, dahinter angeordneter Holm vorhanden sind. Vorzugsweise sind beide Holme am Sitzteiler angeordnet. Vorteilhafterweise verlaufen die zwei Holme beabstandet, insbesondere mehrheitlich parallel zueinander. Vorteilhafterweise sind die Holme horizontal ausgerichtet..

Der Sitzteiler ist als ein mechanisch stabiles Bauteil des Fluggastsitzes ausgebildet. Insbesondere ist derSitzteiler dazu ausgelegt Kräfte, welche bei einem Crash auf den Fluggastsitz wirken, aufzunehmen und/oder über das Gestell in Richtung des Bodens der Fluggastkabine zu leiten und/oder in den Boden abzuleiten.

Der Sitzteiler weist in Sitzrichtung gesehen eine Höhe, eine Breite und eine Tiefe auf. Die Breite des Sitzteilers, z.B. im einstelligen Zentimeterbereich, ist bevorzugt kleiner als die Tiefe des Sitzteilers. Beispielsweise ergibt sich die Höhe des Sitzteilers aus einer Abmessung in vertikaler Richtung in Bezug zum Fluggastsitz. Bevorzugt beträgt die Höhe des Sitzteilers ein Vielfaches der Breite und/oder der Tiefe des Sitzteilers.

Am Sitzteiler ist die Umhausung anordenbar, insbesondere befestigbar. Die Umhausung umgibt zumindest teilweise die Rückenlehne des Fluggastsitzes. In einer bevorzugten Ausführungsform umfasst der Fluggastsitz die Umhausung, welche im Bereich der Rückenlehne anordenbar ist. Beispielsweise ist die Rückenlehne im Bereich der Umhausung, relativ zur Umhausung verstellbar, insbesondere beweglich geführt. Bevorzugterweise ist die Umhausung feststehend, z.B. positionsfest und insbesondere nicht beweglich bei der Verstellung der Rückenlehne. Vorzugsweise umfasst die Umhausung das Strukturbauteil. In einer vorteilhaften Ausführungsvariante ist das Strukturbauteil innerhalb der Umhausung angeordnet.

Bevorzugt sind pro Fluggastsitz zwei Sitzteiler vorhanden. Beispielsweise sind die beiden Sitzteiler in Breitenrichtung beabstandet voneinander, insbesondere rechts und links seitlich, in Bezug zur Sitzrichtung am Fluggastsitz angeordnet. Bevorzugt sind die beiden Sitzteiler parallel zueinander angeordnet. Vorteilhafterweise sind zwei Ebenen jeweils aufgespannt aus der Höhe und der Tiefe des jeweiligen Sitzteilers zumindest annähernd parallel angeordnet. Insbesondere wird der Fluggastsitz an beiden Seiten durch die Sitzteiler begrenzt, vorteilhafterweise im Bereich des Sitzbodens. Bevorzugterweise ist der Sitzteiler derart mechanisch belastbar ausgeführt, dass beispielsweise am Sitzteiler die Gurtanbindungspunkte für den Sicherheitsgurt für den Fluggast anordenbar sind, z.B. anschraubbar sind. Unterhalb ist der Sitzteiler mit einer Stützfuß-Struktur des Gestells mit dem Kabinenboden verbindbar.

Der Kern der Erfindung ist, dass das Strukturbauteil am Sitzteiler angeordnet ist, wobei das Strukturbauteil ein Plattenverbundbauteil umfasst, wobei das Plattenverbundbauteil eine oder mehrere Deckplatten aufweist, wobei zwischen mehreren, insbesondere zwischen zwei Deckplatten eine Verbindungsstruktur vorgesehen ist, wobei durch die Verbindungsstruktur Hohlräume zwischen den Deckplatten geschaffen werden, wobei das Volumen der Hohlräume mindestens 50% des Volumen zwischen den Deckplatten des Plattenverbundbauteils beträgt.

Beispielsweise ist das Strukturbauteil mittels einer Verbindungsvorrichtung, z.B. einer Steckverbindung am Sitzteiler angeordnet. Vorzugsweise sind das Strukturbauteil und der Sitzteiler starr miteinander, insbesondere stabil und/oder unbeweglich und/oder fest miteinander verbunden, insbesondere mechanisch stabil miteinander verbunden. Vorzugsweise ist das Strukturbauteil als ein flächiges und/oder plattenförmiges Element ausgebildet. Bevorzugt erstreckt sich das Strukturbauteil ausgehend vom Sitzteiler nach oben, weg vom Boden der Fluggastkabine.

Vorteilhafterweise umfasst das Strukturbauteil ein Plattenverbundbauteil, insbesondere besteht das Strukturbauteil aus einem Plattenverbundbauteil.

Bevorzugt weist das Plattenverbundbauteil eine oder mehrere Deckplatten auf, wobei zwischen mehreren, insbesondere zwischen zwei Deckplatten die Verbindungsstruktur vorgesehen ist. Durch die Verbindungsstruktur ergibt sich vorteilhaft ein mechanisch stabiles Plattenverbundbauteil, insbesondere bei einer Druckbelastung auf eine Fläche der Deckplatten, bei gleichzeitig einem geringen Gewicht des Plattenverbundbauteils. In einer weiteren möglichen Ausführungsform ist ein weiteres Plattenverbundbauteil mit z.B. drei Deckplatten möglich, so dass sich ein Aufbau für das weitere Plattenverbundbauteil wie folgt ergibt: Deckplatte, Verbindungsstruktur, Deckplatte, Verbindungsstruktur, Deckplatte.

Durch die flächige Ausführung der Deckplatten wird zum Beispiel eine Ebene aufgespannt, insbesondere umfasst die Ebene eine Fläche. Bevorzugt wird durch die Fläche der Deckplatten und den Abstand zwischen den Deckplatten ein Volumen gebildet.

Bevorzugt weisen die Deckplatten eine Dicke von wenigen Millimetern auf. Beispielsweise ist ein Abstand zwischen zwei Deckplatten als eine Länge der Flächennormalen zwischen den beiden Platten definiert.

Vorzugsweise werden durch die Verbindungsstruktur Hohlräume zwischen den Deckplatten geschaffen. Beispielsweise beträgt das Volumen der Hohlräume mindestens 50% des Volumens zwischen den Deckplatten des Plattenverbundbauteils. Bevorzugt beträgt das Volumen 80% bis 99%, insbesondere 95%.

Beispielsweise ist das Plattenverbundbauteil flächig ausgeführt, insbesondere weist das Plattenverbundbauteil eine Länge, eine Breite und eine Höhe auf. Die Länge und/oder Breite des Plattenverbundbauteils sind ein Vielfaches der Höhe des Plattenverbundbauteils.

Beispielsweise weist die Verbindungsstruktur ein Materialvolumen auf, insbesondere ein Materialvolumen der Verbindungsstruktur innerhalb der Deckplatten. Vorteilhafterweise entstehen die Hohlräume mit ihrem Volumen als Differenz zwischen dem Volumen zwischen den Deckplatten ohne die Verbindungsstruktur abzüglich dem Materialvolumen der Verbindungsstruktur.

In einer bevorzugten Ausführungsform sind die Deckplatten des Plattenverbundbauteils flächig und dünn ausgeführt. Beispielsweise beträgt die Dicke der Deckplatten wenige Millimeter, insbesondere 1 bis 3 Millimeter.

Bevorzugterweise sind die zwei Deckplatten des Plattenverbundbauteils insbesondere annähernd parallel zu einander angeordnet. Vorteilhafterweise entsteht durch die beabstandete Anordnung der Deckplatten ein Hohlraum zwischen den Deckplatten. Beispielsweise entsteht durch die beabstandete Anordnung der Deckplatten zueinander ein Abstand zwischen den Deckplatten, insbesondere ist der Abstand an nahezu jeder Position zwischen den Deckplatten gleich.

In einer vorteilhaften Ausführungsvariante ist die Fläche der Deckplatte gleich einer Fläche des Plattenverbundbauteils, gebildet aus der Länge und der Breite des Plattenverbundbauteils.

In einer bevorzugten Ausführungsvariante erstreckt sich die Verbindungsstruktur in einem Querschnitt des Plattenverbundbauteils alternierend zwischen den Deckplatten, wobei die alternierende Verbindungsstruktur die Deckplatten berührt.

Beispielsweise ist eine Draufsicht auf die Höhe des Plattenverbundbauteils gleichzeitig der Querschnitt durch das Plattenverbundbauteil mit der Verbindungsstruktur. Bevorzugterweise ist die Verbindungsstruktur alternierend, insbesondere sich wiederholend, insbesondere sich regelmäßig wiederholend ausgebildet. Vorzugsweise weist die Verbindungsstruktur eine Höhe auf, welche ungefähr der Höhe zwischen den beiden Deckplatten des als Plattenverbundbauteil ausgebildeten Strukturbauteils entspricht. Beispielsweise ist die Verbindungsstruktur derart zwischen den Deckplatten angeordnet, dass die Verbindungsstruktur und die Deckplatten sich berühren. Vorteilhafterweise erfolgt die Berührung von Verbindungsstruktur und Deckplatten an mehreren Stellen.

In einer vorteilhaften Ausgestaltung weist die alternierende Verbindungsstruktur Maximalstellen auf, wobei die alternierende Verbindungsstruktur an einem Teil der Maximalstellen mit den Deckplatten verbunden ist.

Bevorzugterweise ist die Verbindungsstruktur als eine regelmäßige Struktur ausgebildet. Ebenso ist eine unregelmäßige Verbindungsstruktur möglich, z.B. eine schaumartige Struktur. Die Verbindungsstruktur umfasst beispielsweise Maximalstellen, wobei als Maximalstelle eine, insbesondere punktförmige Stelle bezeichnet ist, welche im Vergleich zu der sie umgebenden Verbindungsstruktur erhaben ausgebildet ist, insbesondere ergibt sich ein Punktkontakt.

Vorzugsweise sind alle Maximalstellen mit den jeweils berührenden Deckplatten verbunden. Bevorzugterweise ist die Verbindung zwischen Deckplatten und Verbindungsstruktur z.B. mittels einem Klebstoff möglich, und/oder löten und/oder schweißen.

In einer weiteren vorteilhaften Ausführungsform verlaufen die Maximalstellen entlang einer Linie. Vorzugsweise bilden die Maximalstellen eine gerade Linie, insbesondere mit einem Linienkontakt.

Bevorzugterweise verlaufen die Maximalstellen entlang eines Bandes mit einer Kontaktfläche. Beispielsweise sind die Maximalstellen, als das Band mit der Kontaktfläche ausgebildet. Zum Beispiel weisen die Maximalstellen eine Länge entlang der Linie auf, ebenso eine Breite. Vorzugsweise entsteht durch die Länge und die Breite das Band mit der Kontaktfläche an den Deckplatten, insbesondere ausgebildet als ein Flächenkontakt.

In einer vorteilhaften Ausgestaltung weist das Band eine Begrenzung der Kontaktfläche auf. Insbesondere ist die Begrenzung als eine Berandung ausgebildet. Beispielsweise zeigt die Berandung einen nicht geraden Verlauf, insbesondere ist die Berandung wellenförmig und/oder mit Einbuchtungen ausgebildet. Bevorzugterweise ist eine Linie innerhalb der Kontaktfläche vorhanden, welche insbesondere als eine gerade Linie ausgebildet ist.

In einer vorteilhaften Ausführungsform ist die Verbindungsstruktur im Querschnitt wellenförmig ausgebildet.

Beispielsweise weist die Verbindungsstruktur im Querschnitt eine Welle auf, insbesondere umfasst die Welle ein Wellental und einen Wellenberg. Vorteilhafterweise umfassen sowohl der Wellenberg als auch das Wellental einen Scheitelpunkt, insbesondere ergibt sich eine Linie von Scheitelpunkten der Wellenberge und/oder der Wellentäler. Bevorzugterweise ist die wellenförmige Verbindungsstruktur als eine Art sinus-förmige Welle ausgebildet. In einer vorteilhaften Ausführungsvariante sind die Scheitellinien der Wellentäler parallel zueinander, weiter sind die Scheitellinien der Wellenberge parallel zueinander, und/oder sind die Scheitellinien der Wellenberge parallel zu den Scheitellinien der Wellentäler ausgerichtet.

Beispielsweise ist auch eine wabenartige und/oder fachwerkartige Ausbildung der Verbindungsstruktur möglich.

In einer vorteilhaften Ausgestaltung sind die Linien der Maximalstellen und/oder die Bänder der Kontaktflächen innerhalb des Plattenverbundbauteils annähernd parallel zueinander ausgerichtet. Bevorzugt handelt es sich um gerade Linien bzw. gerade Bänder mit einer Kontaktfläche, insbesondere ist eine gerade Linie innerhalb der Berandung der Kontaktfläche ausgebildet. Beispielsweise sind die Linien im Wesentlichen parallel zueinander ausgerichtet, insbesondere mehrheitlich parallel. Vorteilhafterweise darf ein Winkel zwischen zwei Linien eine Abweichung von 5° nicht übersteigen.

In einer vorteilhaften Ausgestaltung weist das Strukturbauteil eine lange Seite mit einer langen Kante und eine im Vergleich kürzere Seite mit einer kürzeren Kante auf und die geraden Linien und/oder die geraden Bänder der Maximalstellen der Verbindungsstruktur in dem Plattenverbundbauteil parallel zu der langen Kante des Strukturbauteils ausgerichtet sind.

Vorteilhafterweise entsteht durch die Ausrichtung der Verbindungsstruktur mit den geraden Linien und/oder den geraden Bändern vorzugsweise parallel oder leicht geneigt, z.B. in einem kleinen Winkel, mit z.B. wenigen Grad, insbesondere 1 bis 10° Abweichung zu der langen Kante des Strukturbauteils ein mechanisch sehr stabiles Bauteil, insbesondere bei einer Zug- und/oder Druckbelastung auf die lange Seite des Strukturbauteils, bzw. auf der langen Kante an der langen Seite. Beispielsweise entsteht die Zug- und/oder Druckbelastung durch eine Belastung, insbesondere die Zugbelastung durch eine Kraft welche auf den Sicherheitsgurt des Fluggastes wirkt. Vorteilhafterweise liegt der Vektor der, am Strukturbauteil angreifenden Kraft, mehrheitlich in einer Hauptebene, aufgespannt durch die Tiefe und die Höhe des Strukturbauteils. Beispielsweise entstehen Kräfte mit dieser Richtung, bzw. einem Kraftvektor in diese Richtung bei einem Lastfall, z. B. einem Crash.

Für eine korrekte Ausrichtung der Verbindungsstruktur wird das Strukturbauteil beispielsweise aus einer Platte des Plattenverbundbauteils ausgeschnitten, z.B. ausgesägt, insbesondere um die korrekte Ausrichtung sicherzustellen.

Bevorzugterweise umfasst das Plattenverbundbauteil einen Abschnitt aus einem Metall. Beispielsweise ist das ganze Plattenverbundbauteil aus einem Metall, insbesondere einem Leichtmetall, z.B. Aluminium und/oder aus einem Verbundwerkstoff hergestellt. In einer weiteren Ausgestaltung sind eine oder beide Deckplatten aus einem Metall, z.B. Aluminium hergestellt, die Verbindungsstruktur aus einem Kunststoff und/oder aus einem Verbundmaterial, z.B. Kohlefasermatten. Eine umgekehrte Materialauswahl für Deckplatten und Verbindungsstruktur ist ebenfalls möglich.

In einer vorteilhaften Ausgestaltung ist an dem Fluggastsitz an jedem Sitzteiler ein Strukturbauteil angeordnet, insbesondere mit dem Sitzteiler verbunden. Beispielsweise umfasst der Fluggastsitz weitere Strukturbauteile, welche insbesondere winklig zu den am Sitzteiler angeordneten Strukturbauteilen angeordnet sind. Diese weiteren Strukturbauteile sind ebenfalls als Plattenverbundbauteile ausführbar.

Eine Sitzreihe besteht aus mindestens zwei Fluggastsitzen nach einer der vorgenannten Ausgestaltungsmöglichkeiten. Vorzugsweise besteht die Sitzreihe aus zwei Fluggastsitzen, wobei die zwei Fluggastsitze ein gemeinsames Gestell zur Befestigung am Kabinenboden aufweisen. Beispielsweise sind an der Stützfuß-Struktur die Holme angeordnet, an welchen wiederum die Sitzteiler angeordnet sind. Die, beispielsweise, zwei Fluggastsitze umfassen gemeinsame Holme. In einer bevorzugten Ausführungsvariante sind an den Holmen für jeden Fluggastsitz zwei Sitzteiler angeordnet. Bevorzugt sind an den Sitzteilern über die Verbindungsvorrichtung die Strukturbauteile angeordnet. Insbesondere umfassen die Strukturbauteile die Plattenverbundbauteile mit der Verbindungsstruktur. Vorzugsweise ist die Verbindungsstruktur wellenförmig zwischen den Deckplatten ausgeführt. Beispielsweise ist die Ausrichtung der Scheitellinien der Wellenberge und -täler parallel zur langen Kante des Strukturbauteils.

### Figurenbeschreibung

Weitere vorteilhafte Merkmale, Ausgestaltungen, Varianten und Ausführungsformen sind anhand eines schematischen Ausführungsbeispiels näher erläutert.

Im Einzelnen zeigt:
- Figur 1: in einer perspektivischen Ansicht schräg von vorne eine Sitzreihe mit zwei Fluggastsitzen jeweils umfassend einen Sitzboden, eine Rückenlehne samt rückseitiger Umhausung und eine Beinauflage,
- Figur 2: die Sitzreihe gemäß Figur 1 in einer perspektivischen Ansicht von schräg hinten,
- Figur 3: ein Teil einer Grundkonstruktion mit einem Gestell und mehreren Strukturbauteilen der Sitzreihe aus Figur 1 in einer perspektivischen Ansicht von schräg vorne,
- Figur 4: Teile der Grundkonstruktion der Fluggastsitze 3 und 4 mit einem Detail X, in schräg seitlicher Ansicht,
- Figur 5: eine seitliche Draufsicht auf zwei Strukturbauteile des Fluggastsitzes 1,
- Figur 6: das Detail X aus Figur 4 in einer vergrößerten Darstellung.

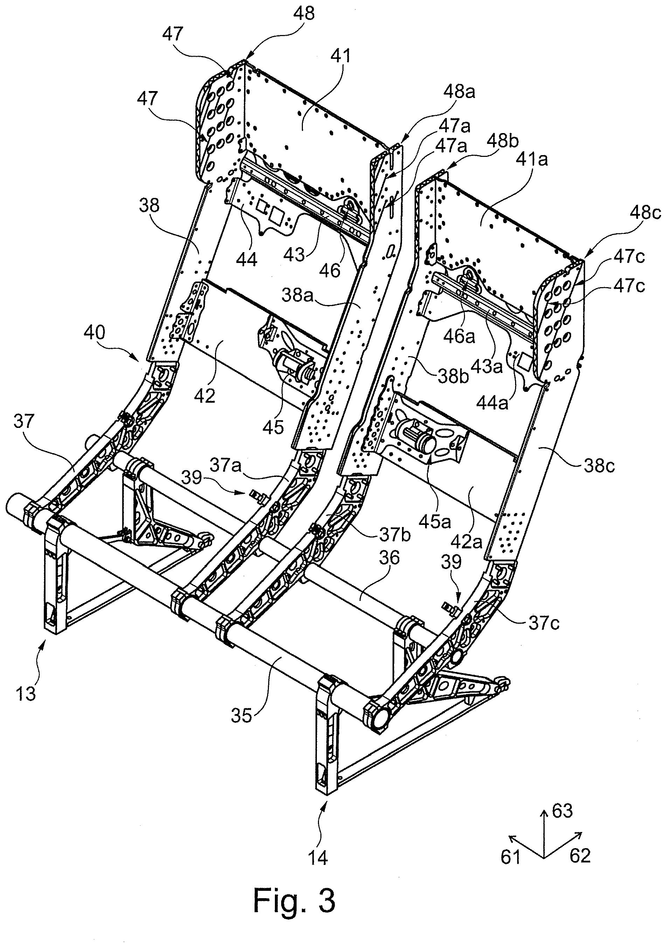

Für einen nutzbaren, funktionsfähigen Fluggastsitz sind weitere Bauteile notwendig, welche in den Figuren 3 bis 5 nicht dargestellt sind. Es wird nur auf die für die Verbindungsvorrichtung notwendigen Bauteile eingegangen.

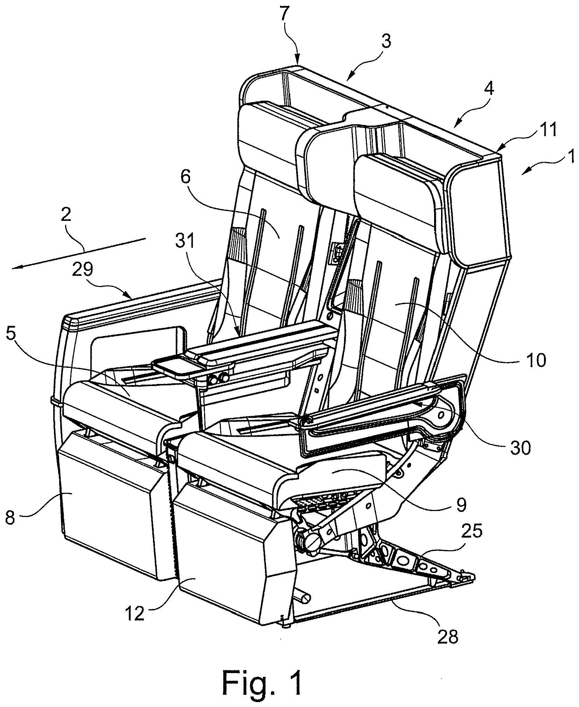

Figur 1 zeigt eine Sitzreihe 1 mit einer Sitzrichtung 2 mit zwei Fluggastsitzen 3 und 4. Nachfolgend beziehen sich Positions- und Richtungsangaben wie vorne, hinten, oben und unten auf die Sitzrichtung 2 und den Nutzzustand der Sitzreihe 1.

Beide Fluggastsitze 3 und 4 sind entsprechend aufgebaut. Der Fluggastsitz 3 weist einen Sitzboden 5, eine Rückenlehne 6 und eine zur Rückenlehne 6 rückseitige Umhausung 7 auf. Im Anschluss an einen vorne liegenden Endbereich des Sitzbodens 5 ist eine vorzugsweise klappbare Beinauflage 8 vorhanden, die um eine horizontale Achse klappbar ist.

Dementsprechend umfasst der Fluggastsitz 4 einen Sitzboden 9, eine Rückenlehne 10, eine Umhausung 11 und eine Beinauflage 12.

Die Sitzboden 5, 9, die Rückenlehnen 6, 10 und die Beinauflagen 8, 12 umfassen eine vorzugsweise ergonomisch geformte Polsterung.

Die Fluggastsitze 3 und 4 sind über zwei Stützbeine 13 und 14 an einem Kabinenboden einer Flugkabine eines dazugehörigen Flugzeuges montierbar.

Das Stützbein 13 weist hierfür an einem unteren Endbereich 16 einer vorderen Strebe 15 eine Montagestelle 17 und eine weitere Montagestelle 20 an einem unteren Endbereich 19 einer hinteren Strebe 18 auf. Zwischen den Endbereichen 16 und 19 ist ein Verstrebungselement 21 vorgesehen.

Das Stützbein 14 weist an einem unteren Endbereich 23 einer vorderen Strebe 22 eine Montagestelle 24 und eine weitere Montagestelle 27 an einem unteren Endbereich 26 einer hinteren Strebe 25 auf. Zwischen den Endbereichen 23 und 26 ist ein Verstrebungselement 28 vorgesehen.

Die Sitzreihe 1 weist zudem eine äußere Armlehne 29 seitlich am Fluggastsitz 3 und eine äußere Armlehne 30 seitlich am Fluggastsitz 4 auf. Zwischen den beiden Fluggastsitzen 3 und 4 ist vorzugsweise auf Höhe der beiden äußeren Armlehnen 29 und 30 eine Konsole 31 vorhanden, welche von einem Fluggast ebenfalls als Armauflage genutzt werden kann.

In einer Schalenform der jeweiligen Umhausung 7 bzw. 11 ist die jeweils dazugehörige Rückenlehne 6 bzw. 10 angeordnet. Die Rückenlehne 6 bzw. 10 ist vorzugsweise zur Einstellung von unterschiedlichen Kippstellungen beweglich in der Umhausung 7 bzw. 11 geführt, beispielsweise zusammen mit dem dazugehörigen verschiebbar gelagerten Sitzboden 5 bzw. 9.

Die Umhausungen 7 und 11 sind mit weiteren Elementen versehen, z. B. rückseitig jeweils mit Zusatzfunktionen versehen. In einem oberen rückseitigen Bereich der Umhausungen 7, 11 ist beispielsweise jeweils eine Multimedia-Einheit32 für digitale Medien vorgesehen, zum Beispiel mit einem elektronischen Ein- und Ausgabegerät bzw. mit einem Touchscreen.

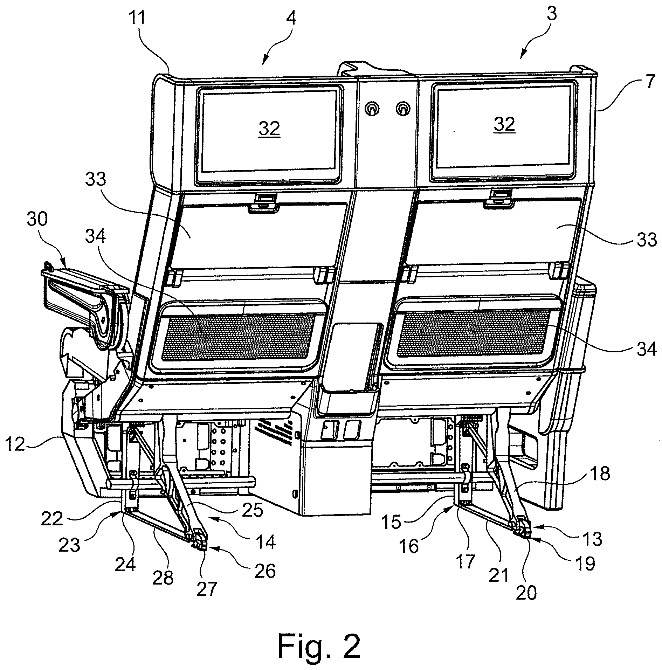

In einem unterhalb an die Multimedia-Einheit 32 anschließenden bzw. mittleren Bereich ist zum Beispiel jeweils ein klappbares Ablageelement 33 wie ein Tablett-Tisch mit einer Tischplatte ausgebildet. In Fig. 2 sind die Ablageelemente 33 in einer nach oben herangeklappten, vertikal stehenden und gesicherten Nichtnutzungsstellung dargestellt.

Unterhalb des jeweiligen klappbaren Ablageelements 33 ist ein Staufach 34 beispielswiese zur Unterbringung von Zeitschriften bzw. Prospekten oder anderen Gegenständen vorhanden.

Figur 3 zeigt in einer perspektivischen Ansicht eine Grundkonstruktion der Sitzreihe 1 der Fluggastsitze 3, 4 gemäß den Figuren 1 und 2. Die Grundkonstruktion umfasst beispielsweise ein Gestell, Strukturbauteile 38, 38a, 38b, 38c und Sitzteiler 37, 37a, 37b, 37c. Beispielsweise sind an einem Gestell, welches die Stützbeine 13, 14, umfasst, zwei Holme 35, 36 angeordnet. Vorteilhafterweise sind der vordere Holm 35 und der hintere Holm 36 annäherungsweise parallel zueinander ausgerichtet. Bevorzugt ist an den Holmen 35 und 36 ein Sitzteiler 37 angeordnet. Bevorzugterweise sind zwei Sitzteiler 37, 37a für den Fluggastsitz 3 und die weiteren Sitzteiler 37b, 37c für den Fluggastsitz 4 vorhanden. Insbesondere weisen die Sitzteiler 37 bis 37c verschiedene Materialausnehmungen auf. Die Sitzteiler 37, 37a, 37b, 37c sind vorzugsweise gleich, insbesondere identisch aufgebaut. Der Sitzteiler 37 ist insbesondere als flaches, winkliges, beispielsweise bogenförmiges Bauteil ausgeführt. Beispielsweise ist am oberen Ende des Sitzteilers 37 eine Verbindungsvorrichtung 40 (nicht vollständig dargestellt) angeordnet.

In einer vorteilhaften Ausführungsform ist an jedem Sitzteiler 37, 37a, 37b, 37c eine Gurtanbindung 39 für einen Sicherheitsgurt des Fluggasts angeordnet, insbesondere sind alle vier angeordneten Gurtanbindungen 39 gleichartig ausgeführt. Beispielsweise ist die Gurtanbindung 39 an den Sitzteilern 37 bis 37c angeschraubt, vorteilhafterweise ist an der Gurtanbindung 39 ein Sicherheitsgurt mit insbesondere einem Gurtschloss und/oder einem auf das Gurtschloss abgestimmtem Haken und/oder Öse angebracht.

Vorteilhafterweise sind die Strukturbauteile 38, 38a, 38b, 38c flächig und/oder plattenförmig ausgebildet, insbesondere weisen sie eine Breite, eine Tiefe und eine Höhe auf. Die Breite ist in dem gezeigten Ausführungsbeispiel im Bereich weniger Zentimeter. Die Tiefe der Strukturbauteile ist ein Vielfaches der Breite. Die Höhe eines jeweiligen Strukturbauteils 38 - 38c ist ebenfalls ein Vielfaches der Breite, insbesondere ist die Höhe größer als die Tiefe. Alle Richtungen sind bezogen auf die drei Raumrichtungen Breite 61, Tiefe 62 und Höhe 63, dargestellt in Figur 3. Vorteilhafterweise ist die Tiefe 62 parallel zur Sitzrichtung 2 ausgerichtet.

Bevorzugterweise sind die Strukturbauteile 38, 38a, 38b, 38c aus Aluminium, beispielsweise einer Sandwich-Konstruktion, insbesondere aus einer Alu-Well-Platte gefertigt, insbesondere ausgeschnitten. In einer bevorzugten Ausführungsvariante weisen die Alu-Well-Platten im Inneren eine wellenförmige Struktur auf, welche insbesondere Wellenberge und/oder Wellentäler umfasst, welche z.B. jeweils eine Scheitellinie aufweisen. Vorteilhafterweise ist die lange Seite der Strukturbauteile 38 bis 38c parallel zu der Scheitellinie der Wellenberge und/oder - täler ausgerichtet. Eine Außenoberfläche der Alu-Well-Platte ist flächig ausgebildet, insbesondere als eine Deckplatte, welche die innenliegende Struktur der Alu-Well-Platte verdeckt.

In der dargestellten Ausführungsform ist das Strukturbauteil 38 bzw. 38c an der linken bzw. rechten Außenseite der Sitzreihe aus zwei Fluggastsitzen angeordnet. Bevorzugt sind die beiden Strukturbauteile 38 und 38c gleich geformt, insbesondere weisen die Strukturbauteile 38 und 38c in ihrem jeweiligen oberen Endbereich, bezogen auf die Höhenrichtung 63, eine Verbreiterung im Vergleich zur Ausdehnung, in Tiefenrichtung 62 betrachtet, im mittleren und unteren Bereich auf.

Die Strukturbauteile 38a und 38b sind in der gezeigten Ausführungsvariante mittig in der Sitzreihe aus Fluggastsitz 3 und 4 angeordnet. Beispielsweise ist das Strukturbauteil 38a die rechte Begrenzung des Fluggastsitzes 3 und das Strukturbauteil 38b die linke Begrenzung des Fluggastsitzes 4. Die beiden Strukturbauteile 38a und 38b sind vorzugsweise gleich ausgeführt, insbesondere weisen sie die gleiche Form auf. Bevorzugt ist das Strukturbauteil 38a bzw. 38b an seinem unteren Endbereich, in Höhenrichtung 63, verbreitert ausgeführt, insbesondere zu einem mittleren und/oder oberen Bereich des Strukturbauteils 38a bzw. 38b.

In der dargestellten Ausführungsform ist zum Beispiel an zwei Strukturbauteilen 38 und 38a ein Verbindungsstrukturbauteil 41 angeordnet. Bevorzugt ist das Verbindungsstrukturbauteil 41 an dem oberen Ende der vertikal ausgerichteten Strukturbauteile 38, 38a angebracht.

Ein Verbindungsstrukturbauteil 41a ist zwischen den vertikal ausgerichteten Strukturbauteilen 38b und 38c angeordnet. Vorzugsweise wirkt das Verbindungsstrukturbauteil 41 bzw. 41a aussteifend und/oder mechanisch stabilisierend mit den beiden vertikalen Strukturbauteilen 38 und 38a, bzw. 38b und 38c zusammen. Beispielsweise sind das Verbindungsstrukturbauteil 41 und die Strukturbauteile 38, 38a mittels Verbindungsmitteln, z.B. Winkeln und/oder Schrauben und/oder Niete miteinander verbunden. Ebenso ist eine Verbindung von Verbindungsstrukturbauteil und Strukturbauteil mittels, z.B. löten, schweißen und/oder kleben, insbesondere materialschlüssig, möglich.

Bevorzugt weist das Strukturbauteil 38a, bzw. 38b Einschnitte und/oder Ausnehmungen auf. Das Strukturbauteil 38a, bzw. 38b ist dazu ausgelegt in diese Ausnehmungen angeordnet, insbesondere eingepasst zu werden.

Alternativ ist eine einstückige Ausbildung der Strukturbauteile 38 und 38a mit dem Verbindungsstrukturbauteil 41 möglich. Für das Verbindungsbauteil 41a gilt entsprechendes.

Vorzugsweise ist das Verbindungsstrukturbauteil 41 bzw. 41a als ein plattenförmiges Element mit beispielsweise einer annähernd rechteckigen Form, mit einer langen und einer kurzen Seite und einer Dicke ausgebildet. Beispielsweise ist das Verbindungsstrukturbauteil derart ausgerichtet, dass die lange Seite des Verbindungsstrukturbauteils 41 bzw. 41a in der horizontalen Richtung bezogen auf den Fluggastsitz angeordnet ist. Die lange Seite des Verbindungsstrukturbauteils 41 bzw. 41a ist in Richtung der Breite 61 ausgerichtet.

In der in Figur 3 gezeigten Ausführungsform schließt das Verbindungsstrukturbauteil 41 mit dem Sitzteiler 38 an einem auf die Sitzrichtung 2 bezogenen, hinteren Ende ab. In Sitzrichtung 2 bezogen ist das Verbindungsstrukturbauteil 41 etwas nach hinten versetzt zum Strukturbauteil 38a angeordnet. Die Ausnehmungen bzw. Einschnitte in welche das Verbindungsstrukturbauteil 41 am Strukturbauteil 38a eingepasst ist, sind insbesondere zwischen einer Mitte und einem hinteren Ende des Strukturbauteils 38a, in Sitzrichtung 2 gesehen, angeordnet.

An der Grundkonstruktion des Fluggastsitzes 4 ist in Figur 3 das Verbindungsstrukturbauteil 41a in das Strukturbauteil 38b eingepasst, insbesondere nach dem gleichen Prinzip wie das Verbindungsstrukturbauteil 41 mit dem Strukturbauteil 38a verbunden ist. Das Verbindungsstrukturbauteil 41a schließt in der gezeigten Ausführungsvariante mit dem Strukturbauteil 38c in einem hinteren Bereich, insbesondere am hinteren Ende des Strukturbauteils 38a, in Sitzrichtung 2 bzw. Tiefenrichtung 62 gesehen, mit diesem ab.

Vorteilhafterweise sind die Verbindungsstrukturbauteile 41 und 41a mit den jeweiligen Strukturbauteilen 38, 38a, 38b, 38c über Verbindungsmittel, insbesondere Winkel und/oder Schrauben und/oder Niete verbunden.

Figur 3 zeigt eine Ausführungsform, bei welcher zwischen den Strukturbauteilen 38 und 38a der Grundkonstruktion des Fluggastsitzes 3 ein weiteres horizontales Strukturbauteil 42 angeordnet ist. Das horizontale Strukturbauteil 42 ist an dem unteren Ende der Strukturbauteile 38 und 38a zwischen diesen angeordnet. Vorzugsweise befindet sich das horizontale Strukturbauteil 42 im Bereich des unteren Rückens eines Fluggastes, wenn dieser auf dem Fluggastsitz 3 Platz genommen hat. Das horizontale Strukturbauteil 42 ist vorteilhafterweise aus Aluminium, insbesondere aus einer Alu-Well-Platte ausgeführt. Bevorzugt ist eine Wellenstruktur in der Alu-Well-Platte derart angeordnet, dass eine Scheitellinie eines Wellenbergs und/oder eines Wellentals parallel zu einer langen Seite des horizontalen Strukturbauteils 42 ausgerichtet ist. Die lange Seite des horizontalen Strukturbauteils 42 ist vorteilhafterweise in Richtung der Breite 61 ausgerichtet, insbesondere parallel.

Beispielsweise ist an der Grundkonstruktion des Fluggastsitzes 4 zwischen den Sitzteilern 38b und 38c ebenfalls ein horizontales Strukturbauteil 42a angeordnet. Das horizontale Strukturbauteil 42a ist insbesondere gleichartig bzw. identisch wie das horizontale Strukturbauteil 42 ausgeführt.

Am Strukturbauteil 42 bzw. 42a ist jeweils ein Anbindungsorgan für einen Sicherheitsgurt vorgesehen, insbesondere ist das Anbindungsorgan als ein Gurtroller 45 bzw. 45a ausgeführt.

Beispielsweise ist der Gurtroller 45 am horizontalen Strukturbauteil 42 angeordnet, insbesondere angeschraubt und/oder angenietet. Vorzugsweise ist der Gurtroller 45 auf dem horizontalen Strukturbauteil 42, in Breitenrichtung gesehen, näher am Strukturbauteil 38a als am Strukturbauteil 38 angeordnet. Bevorzugt ist der Gurtroller 45 auf einem Montageelement, z.B. einem Montageblech angeordnet, insbesondere mittels des Montagelements mit dem horizontalen Strukturbauteil 42 verbunden.

Bevorzugterweise ist der Gurtroller 45a am horizontalen Strukturbauteil 42a angeordnet, insbesondere angeschraubt und/oder angenietet. Vorzugsweise ist der Gurtroller 45a auf dem horizontalen Strukturbauteil 42a, in Breitenrichtung gesehen, näher am Strukturbauteil 38b als am Strukturbauteil 38c angeordnet.

Unterhalb des Verbindungstrukturbauteils 41 bzw. 41a ist ein Anbindungselement 44 bzw. 44a, insbesondere in Form eines Anbindungsblechs angeordnet.

Vorteilhafterweise ist ebenfalls unterhalb in Höhenrichtung 63 gesehen, eine Querstrebe 43 bzw. 43a angeordnet. Die Querstrebe 43 ist vorzugsweise als ein u-profil ausgeführt. Beispielsweise ist die Querstrebe 43, insbesondere als eine cross-bar aus Aluminium und/oder Stahl ausgebildet.

Das Anbindungselement 44 ist vorzugsweise als ein deformierbares, z.B. plastisch verformbares Anbindungsblech ausgeführt, welches Energie durch eine, insbesondere definierte plastische, Verformung in einem Lastfall aufnehmen kann. Vorteilhafterweise ist das Anbindungselement 44 mit den beiden Strukturbauteilen 38 und 38a des Fluggastsitzes 3 verbunden, insbesondere ist das Anbindungselement 44 mittels Verbindungsmitteln, z.B. Schrauben und/oder Niete an das Strukturbauteil 38 bzw. 38a angebracht.

Bevorzugterweise umschließt das Anbindungselement 44 die Querstrebe 43 an einer Seite der u-Form. Insbesondere schließt das Anbindungselement 44 die u-Form der Querstrebe 43 zu einem Hohlkörper ab. Beispielsweise wird eine offene Rückseite der Querstrebe 43 durch das Anbindungselement 44 überbrückt. Beispielsweise ist die Querstrebe 43 an einem, in Tiefenrichtung 62 gesehen, hinteren Ende offen.

Die Querstrebe 43 ist vorzugsweise in eine Ausnehmung am Strukturbauteil 38a eingepasst, insbesondere formschlüssig eingefügt. Am Strukturbauteil 38 liegt die Querstrebe 43 bevorzugt an der in Tiefenrichtung 62 gesehenen, hinteren Seite an, insbesondere weist die hintere, schmale Seite des Strukturbauteils 38 eine Einbuchtung, insbesondere für die Querstrebe 43, auf.

Vorzugsweise ist das Anbindungselement 44 ausgebogen, insbesondere u- förmig. Beispielsweise ist das Anbindungselement 44 als ein Biegeblechteil ausgeführt. Bevorzugt ist die Querstrebe 43 in der Ausbuchtung des Anbindungselements 44 angeordnet. Vorteilhafterweise ergibt sich eine, über die wesentliche Breite des Fluggastsitzes geschlossene, Hohlform aus Querstrebe 43 und eines überdeckenden Abschnitts des Anbindungselements 44.

Bevorzugterweise ist am Anbindungselement 44 ein Anbindungsorgan für den Sicherheitsgurt des Fluggasts angeordnet, insbesondere ausgebildet als Gurtumlenkung 46.

Am Anbindungselement 44 ist die Gurtumlenkung 46 angeordnet. Bevorzugt umfasst die Gurtumlenkung 46 eine Befestigungsstelle und ein insbesondere Ösen-förmiges Umlenkelement, welches derart ausgestaltet ist, dass der Sicherheitsgurt durch das ösenförmige Umlenkelement geführt wird und gleichzeitig Kräfte welche über den Sicherheitsgurt auf die Gurtumlenkung 46 wirken, geführt, insbesondere abgeleitet werden können.

Vorzugsweise ist die Befestigungsstelle der Gurtumlenkung 46 mittels eine Schraube und/oder einem Niet an dem Anbindungselement 44 angeordnet, insbesondere verbunden.

In der vorteilhaften, dargestellten Ausführungsform sind das Anbindungselement 44 und die Befestigungsstelle der Gurtumlenkung 46 dazu ausgelegt Energie aufzunehmen und/oder durch eine, insbesondere gezielte Deformation, z.B. plastische Verformung der Befestigungsstelle der Gurtumlenkung 46 und/oder des Anbindungselements 44 abzubauen.

Die Gurtumlenkung 46 ist bevorzugt in Breitenrichtung 61 näher am Strukturbauteil 38a angeordnet.

Der in Figur 3 nicht dargestellte Sicherheitsgurt des Fluggasts verläuft vom Gurtroller 45 nach oben, in Höhenrichtung 63, zur Gurtumlenkung 45 und dann z.B. über eine Schulter des Fluggasts und den Oberkörper des Fluggasts nach unten. Dieser Sicherheitsgurt ist als zusätzlicher Sicherheitsgurt zum Beckengurt vorhanden. An dem Beckengurt, welcher über ein Gurtschloss schließbar ist, ist der zusätzliche Sicherheitsgurt fixierbar, insbesondere im Gurtschloss des Beckengurts.

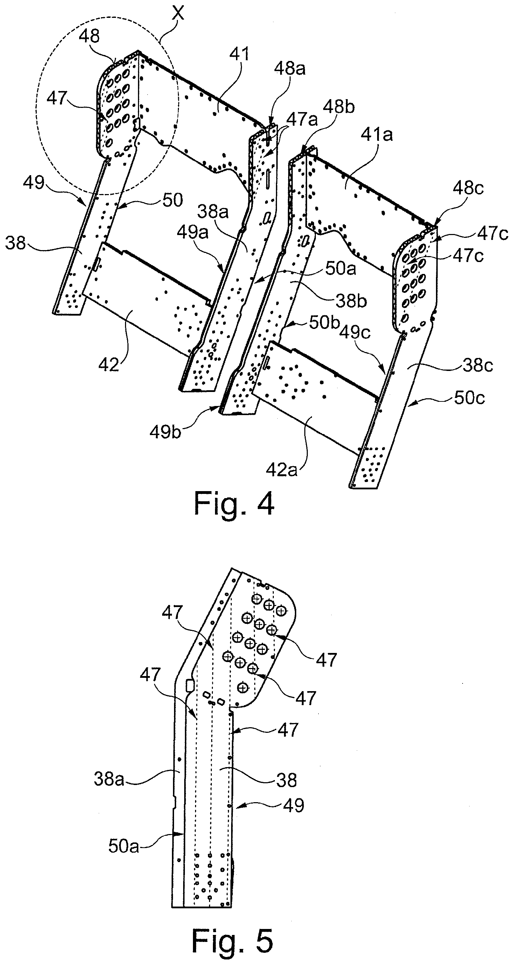

Figur 4 zeigt eine perspektivische Ansicht der Strukturbauteil 38 bis 38c, der Verbindungsstrukturbauteile 41 und 41a und der horizontalen Strukturbauteile 42 und 42. Am Strukturbauteil 38 ist beispielsweise im oberen Bereich eine Verbindungsstruktur 48 zu sehen.

Am Strukturbauteil 38a ist beispielsweise ebenso eine Verbindungsstruktur 48a gezeigt. Die Verbindungsstruktur 48a ist insbesondere identisch zur Verbindungsstruktur 48 ausgeführt.

Das Strukturbauteil 38b weist ebenfalls eine Verbindungsstruktur 48b auf. Die Verbindungsstruktur 48b ist insbesondere identisch zur Verbindungsstruktur 48 und/oder 48a ausgeführt.

Das Strukturbauteil 38c weist vorzugsweise ebenfalls eine Verbindungsstruktur 48c auf. Die Verbindungsstruktur 48c ist insbesondere identisch zur Verbindungsstruktur 48 und/oder 48a und/oder 48b ausgeführt.

Am Strukturbauteil 38a ist die Ausrichtung der Verbindungsstruktur 48a durch eine Linie 47a angedeutet. Die Ausrichtung der Verbindungsstruktur 48a ist insbesondere eine Scheitellinie der Wellenberge und/oder -täler.

Vorteilhafterweise sind auch die Verbindungsstrukturbauteile 41 und 41a mit einer Verbindungsstruktur ausgeführt, ebenso wie die horizontalen Strukturbauteile 42 und 42a. Bevorzugt ist die Verbindungsstruktur in den Verbindungsstrukturbauteilen 41 und 41a und in den horizontalen Strukturbauteilen 42 und 42a gleich ausgeführt wie in den Strukturbauteilen 38 bis 38c.

Beispielsweise ist die Verbindungsstruktur 48 bis 48c als eine alternierende, insbesondere wellenförmige Struktur ausgebildet. Vorzugsweise ist die Verbindungsstruktur 48 bis 48c aus einem zusammenhängenden Element geformt, insbesondere aus einem welligen Bauteil gebildet. Die wellenförmige Verbindungsstruktur 48 bis 48c weist bevorzugt Wellenberge und Wellentäler auf, welche insbesondere eine Scheitteillinie aufweisen. Vorzugsweise sind die Scheitellinien parallel zueinander ausgerichtet. Die Scheitellinien sind als Linien 47 am Strukturbauteil 38 in Figur 4 angedeutet. Ebenso sind die Scheitellinien als Linien 47a am Strukturbauteil 38a angedeutet und als Linien 47c am Strukturbauteil 38c.

Figur 5 zeigt eine seitliche Ansicht der Strukturbauteile 38 und 38a. In der gewählten seitlichen Darstellung ist das Strukturbauteil 38 im Vordergrund, während das Strukturbauteil 38a im Hintergrund ist. Die gestrichelten Linien 47 deuten die Ausrichtung der Scheitellinien der Wellenberge und/oder Wellentäler an. Die Linien 47 sind parallel zu einander ausgerichtet. Ebenso sind die Linien 47 parallel zu einer vorderen langen Kante 49 und/oder parallel zu einer hinteren langen Kante 50 des Strukturbauteils 38 ausgerichtet. Insbesondere ist auch eine leicht schräge Ausrichtung der Linien 47 mit z.B. einer kleinen Abweichung zur vorderen langen Kante 49 und/oder hinteren langen Kante 50 möglich, z.B. eine Abweichung bis zu 10°.

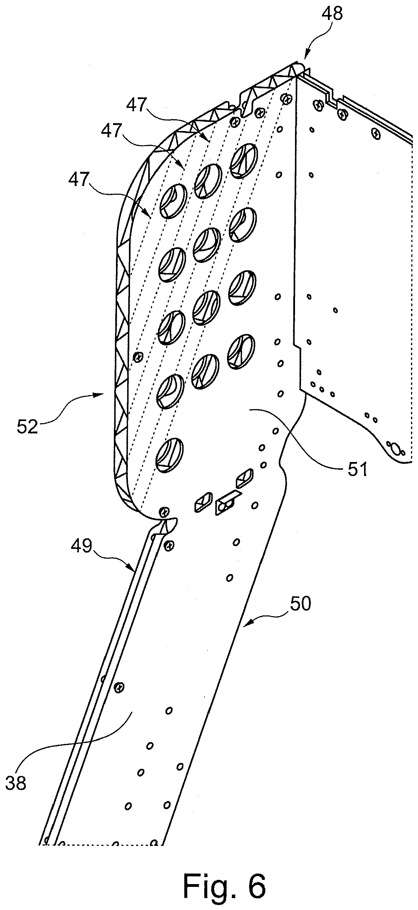

Figur 6 zeigt einen vergrößerten Ausschnitt gemäß dem Detail X aus Figur 4. Im oberen Bereich des Strukturbauteils 38 ist die Verbindungsstruktur 48 zu sehen, insbesondere die wellenförmige Ausbildung der Verbindungsstruktur 48, die vorzugsweise die regelmäßige und/oder gleichmäßige Wellenstruktur aufweist und zwischen zwei Deckplatten ausgebildet ist. Mittels Linien 47 ist die Ausrichtung der Scheitellinien angedeutet. Vorzugsweise sind eine vordere lange Kante 49 und eine hintere lange Kante 50 des Strukturbauteils 38 ebenfalls parallel zueinander und somit auch zu den Scheitellinien, eingezeichnet als Linien 47, der Verbindungsstruktur 48 ausgerichtet.

### Bezugszeichenliste

| | | | |
|---|---|---|---|
| 1 | Sitzreihe | 37b | Sitzteiler |
| 2 | Sitzrichtung | 37c | Sitzteiler |
| 3, 4 | Fluggastsitz | 38 | Strukturbauteil |
| 5 | Sitzboden | 38a | Strukturbauteil |
| 6 | Rückenlehne | 38b | Strukturbauteil |
| 7 | Umhausung | 38c | Strukturbauteil |
| 8 | Beinauflage | 39 | Gurtanbindung |
| 9 | Sitzboden | 40 | Verbindungs-vorrichtung |
| 10 | Rückenlehne | | |
| 11 | Umhausung | 41, 41a | Verbindungs-strukturbauteil |
| 12 | Beinauflage | | |
| 13, 14 | Stützbein | 42, 42a | horizontales |
| 15 | Strebe | | Strukturbauteil |
| 16 | Endbereich | 43, 43a | Querstrebe |
| 17 | Montagestelle | 44, 44a | Anbindungselement |
| 18 | Strebe | 45, 45a | Gurtroller |
| 19 | Endbereich | 46, 46a | Gurtumlenkung |
| 20 | Montagestelle | 47 | Linie |
| 21 | Verstrebungselement | 47a | Linie |
| 22 | Strebe | 47c | Linie |
| 23 | Endbereich | 48 | Verbindungsstruktur |
| 24 | Montagestelle | 48a | Verbindungsstruktur |
| 25 | Strebe | 48b | Verbindungsstruktur |
| 26 | Endbereich | 48c | Verbindungsstruktur |
| 27 | Montagestelle | 49, 49a | Kante |
| 28 | Verstrebungselement | 49b, 49c | Kante |
| 29, 30 | Armlehne | 50, 50a | Kante |
| 31 | Konsole | 50b, 50c | Kante |
| 32 | Multimedia-Einheit | 51, 52 | Deckplatte |
| 33 | Ablageelement | 53 bis 60 | nicht verwendet |
| 34 | Staufach | 61 | Breite |
| 35 | vorderer Holm | 62 | Tiefe |
| 36 | hinterer Holm | 63 | Höhe |
| 37 | Sitzteiler | | |
| 37a | Sitzteiler | | |

## Patentansprüche

1. Fluggastsitz (3, 4) mit einem Gestell, das zur Befestigung an einem Boden an einer Fluggastkabine vorgesehen ist, wobei das Gestell einen Sitzteiler (37, 37a, 37b, 37c) und quer zur Sitzrichtung verlaufende Holme (35, 36) umfasst, wobei der Sitzteiler (37, 37a, 37b, 37c) durch die Holme (35, 36) gehalten ist, wobei eine Umhausung (7) ein Strukturbauteil (38, 38a, 38b, 38c, 40, 41, 41a, 42, 42a) umfasst, wobei die Umhausung (7) eine Rückenlehne (6) zumindest teilweise umgibt, **dadurch gekennzeichnet, dass** das Strukturbauteil (38, 38a, 38b, 38c) am Sitzteiler (37, 37a, 37b, 37c) angeordnet ist, wobei das Strukturbauteil (38, 38a, 38b, 38c) ein Plattenverbundbauteil umfasst, wobei das Plattenverbundbauteil eine oder mehrere Deckplatten (51, 52) aufweist, wobei zwischen mehreren, insbesondere zwischen zwei Deckplatten (51, 52) eine Verbindungsstruktur (48, 48a, 48b, 48c) vorgesehen ist, wobei durch die Verbindungsstruktur (48, 48a, 48b, 48c) Hohlräume zwischen den Deckplatten (51, 52) geschaffen werden, wobei das Volumen der Hohlräume mindestens 50% des Volumen zwischen den Deckplatten des Plattenverbundbauteils beträgt.

2. Fluggastsitz (3, 4) nach Anspruch 1, wobei sich die Verbindungsstruktur (48, 48a, 48b, 48c) in einem Querschnitt des Plattenverbundbauteils alternierend zwischen den Deckplatten (51, 52) erstreckt, wobei die alternierende Verbindungsstruktur (48, 48a, 48b, 48c) die Deckplatten (51, 52) berührt.

3. Fluggastsitz (3, 4) nach Anspruch 2, wobei die alternierende Verbindungsstruktur (48, 48a, 48b, 48c) Maximalstellen aufweist, wobei die alternierende Verbindungsstruktur (48, 48a, 48b, 48c) an einem Teil der Maximalstellen mit den Deckplatten (51, 52) verbunden ist.

4. Fluggastsitz (3, 4) nach einem der vorhergehenden Ansprüche, wobei die Maximalstellen entlang einer Linie (47, 47a, 47c) verlaufen.

5. Fluggastsitz (3, 4) nach einem der Ansprüche 1 bis 3, wobei die Maximalstellen entlang eines Bandes mit einer Kontaktfläche verlaufen.

6. Fluggastsitz (3, 4) nach einem der vorhergehenden Ansprüche, wobei die Verbindungsstruktur (48, 48a, 48b, 48c) im Querschnitt wellenförmig ausgebildet ist.

7. Fluggastsitz (3, 4) nach einem der vorhergehenden Ansprüche, wobei die Linien (47, 47a, 47c) und/oder die Bänder innerhalb des Plattenverbundbauteils annähernd parallel zueinander ausgerichtet sind.

8. Fluggastsitz (3, 4) nach einem der vorhergehenden Ansprüche, wobei das Strukturbauteil eine lange Seite mit einer langen Kante und eine im Vergleich kürzere Seite mit einer kürzeren Kante aufweist und die geraden Linien und/oder die geraden Bänder der Maximalstellen der Verbindungsstruktur in dem Plattenverbundbauteil parallel zu der langen Kante des Strukturbauteils ausgerichtet sind.

9. Fluggastsitz (3, 4) nach einem der vorhergehenden Ansprüche, wobei das Plattenverbundbauteil einen Abschnitt aus einem Metall umfasst.

10. Sitzreihe (1) mit mindestens zwei Fluggastsitzen (3, 4) nach einem der vorhergehenden Ansprüche.

## Claims

1. Aircraft passenger seat (3, 4) comprising a support framework, the support framework being designed to be fastened to a floor in an aircraft passenger cabin, wherein the support framework has a seat divider (37, 37a, 37b, 37c) and cross rails (35, 36) running transversely to the seating direction, wherein the seat divider (37, 37a, 37b, 37c) is held by the cross rails (35, 36), wherein a housing (7) comprises a structural component (38, 38a, 38b, 38c, 40, 41, 41a, 42, 42a), wherein the housing (7) at least partially surrounds a backrest (6), **characterized in that** the structural component (38, 38a, 38b, 38c) is arranged on the seat divider (37, 37a, 37b, 37c), wherein the structural component (38, 38a, 38b, 38c) comprises a composite plate component, wherein the composite plate component has one or more cover plates (51, 52), wherein a connecting structure (48, 48a, 48b, 48c) is provided between a plurality of cover plates, in particular between two cover plates (51, 52), wherein gaps are produced between the cover plates (51, 52) by the connecting structure (48, 48a, 48b, 48c), wherein the volume of the gaps makes up at least 50% of the volume between the cover plates of the composite plate component.

2. Aircraft passenger seat (3, 4) according to Claim 1, wherein the connecting structure (48, 48a, 48b, 48c) extends in a cross section of the composite plate component alternating between the cover plates (51, 52), wherein the alternating connecting structure (48, 48a, 48b, 48c) is in contact with the cover plates (51, 52).

3. Aircraft passenger seat (3, 4) according to Claim 2, wherein the alternating connecting structure (48, 48a, 48b, 48c) has maximum points, wherein the alternating connecting structure (48, 48a, 48b, 48c) is connected to the cover plates (51, 52) at some of the maximum points.

4. Aircraft passenger seat (3, 4) according to one of the preceding claims, wherein the maximum points run along a line (47, 47a, 47c).

5. Aircraft passenger seat (3, 4) according to one of Claims 1 to 3, wherein the maximum points run along a strip with a contact surface.

6. Aircraft passenger seat (3, 4) according to one of the preceding claims, wherein the connecting structure (48, 48a, 48b, 48c) is configured to be wave-shaped in cross section.

7. Aircraft passenger seat (3, 4) according to one of the preceding claims, wherein the lines (47, 47a, 47c) and/or the strips within the composite plate component are oriented approximately parallel to one another.

8. Aircraft passenger seat (3, 4) according to one of the preceding claims, wherein the structural component has a long side with a long edge and a comparatively shorter side with a shorter edge, and the straight lines and/or the straight strips of the maximum points of the connecting structure in the composite plate component are oriented parallel to the long edge of the structural component.

9. Aircraft passenger seat (3, 4) according to one of the preceding claims, wherein the composite plate component comprises a portion made of a metal.

10. Seat row (1) comprising at least two aircraft passenger seats (3, 4) according to one of the preceding claims.

## Revendications

1. Siège de passager d'aéronef (3, 4) comportant un cadre, qui est prévu pour la fixation à un plancher d'une cabine de passagers d'aéronef, le cadre comprenant un séparateur de sièges (37, 37a, 37b, 37c) et des barres (35, 36) s'étendant transversalement à la direction de siège, le séparateur de sièges (37, 37a, 37b, 37c) étant retenu par les barres (35, 36), un logement (7) comprenant un composant structural (38, 38a, 38b, 38c, 40, 41, 41a, 42, 42a), le logement (7) entourant au moins partiellement un dossier (6), **caractérisé en ce que** le composant structural (38, 38a, 38b, 38c) est disposé sur le séparateur de sièges (37, 37a, 37b, 37c), le composant structural (38, 38a, 38b, 38c) comprenant un composant composite à plaques, le composant composite à plaques présentant une ou plusieurs plaques de recouvrement (51, 52), une structure de liaison (48, 48a, 48b, 48c) étant prévue entre plusieurs, en particulier entre deux plaques de recouvrement (51, 52), des espaces creux étant produits entre les plaques de recouvrement (51, 52) par la structure de liaison (48, 48a, 48b, 48c), le volume des espaces creux valant au moins 50% du volume entre les plaques de recouvrement du composant composite à plaques.

2. Siège de passager d'aéronef (3, 4) selon la revendication 1, la structure de liaison (48, 48a, 48b, 48c) s'étendant en alternance entre les plaques de recouvrement (51, 52) dans une section transversale du composant composite à plaques, la structure de liaison alternée (48, 48a, 48b, 48c) étant en contact avec les plaques de recouvrement (51, 52).

3. Siège de passager d'aéronef (3, 4) selon la revendication 2, la structure de liaison alternée (48, 48a, 48b, 48c) présentant des points maximaux, la structure de liaison alternée (48, 48a, 48b, 48c) étant reliée aux plaques de recouvrement (51, 52) au niveau d'une partie des points maximaux.

4. Siège de passager d'aéronef (3, 4) selon l'une des revendications précédentes, les points maximaux s'étendant le long d'une ligne (47, 47a, 47c).

5. Siège de passager d'aéronef (3, 4) selon l'une des revendications 1 à 3, les points maximaux s'étendant le long d'une bande comportant une surface de contact.

6. Siège de passager d'aéronef (3, 4) selon l'une des revendications précédentes, la structure de liaison (48, 48a, 48b, 48c) étant réalisée de manière ondulée en section transversale.

7. Siège de passager d'aéronef (3, 4) selon l'une des revendications précédentes, les lignes (47, 47a, 47c) et/ou les bandes à l'intérieur du composant composite à plaques étant orientées approximativement parallèlement les unes aux autres.

8. Siège de passager d'aéronef (3, 4) selon l'une des revendications précédentes, le composant structural présentant un côté long comportant un bord long et un côté comparativement plus court comportant un bord plus court et les lignes droites et/ou les bandes droites des points maximaux de la structure de liaison dans le composant composite à plaques étant orientées parallèlement au côté long du composant structural.

9. Siège de passager d'aéronef (3, 4) selon l'une des revendications précédentes, le composant composite à plaques comprenant une section constituée d'un métal.

10. Rangée de sièges (1) comportant au moins deux sièges de passager d'aéronef (3, 4) selon l'une des revendications précédentes.
